# DEMANDE DE BREVET EUROPEEN

(11) **EP 2 495 672 A1**
(43) Date de publication de la demande: **05.09.2012**
(21) Numéro de dépôt: 12157054.3
(22) Date de dépôt: 27.02.2012
(51) Int. Cl.: G06F 17/30

(54) **Commande d'accès à distance de favoris Internet pour un équipement de restitution**

(30) Priorité: 02.03.2011 FR 1151702
(71) Demandeur: France Telecom, 75015 Paris (FR)
(72) Inventeur: GuazzettiI, Manuel, 78220 Viroflay (FR); Vincent, Yoann, 94230 Cachan (FR)
(74) Mandataire: Cabinet Plasseraud

(57) **Abrégé**

L'invention concerne un traitement de données pour la gestion de favoris Internet, comme des flux RSS, auprès d'un équipement de restitution de salon, par exemple un poste de télévision, et sur un équipement mobile distant connecté à l'équipement de restitution, par exemple un téléphone mobile tactile.

## Description

La présente invention concerne un traitement de données pour l'enrichissement et la gestion de favoris Internet auprès d'un équipement de restitution de salon, par exemple un poste de télévision.

Un favori Internet est constitué d'un ensemble de données comportant au moins une adresse de ressource sur le réseau étendu Internet. Il peut être enregistré dans le navigateur Internet d'un appareil à disposition d'un utilisateur pour une réutilisation future.

De plus en plus d'équipements de restitution de salon (téléviseur, décodeur de salon, centre ou boîtier multimédias, ou autres) sont connectés à Internet et possèdent des fonctions de navigateur Internet.

En parallèle, on assiste à une démocratisation des écrans de grande taille capables d'un affichage en haute définition. Du fait de l'utilisation quotidienne des postes de télévision, ceux-ci sont un moyen de prédilection pour offrir de nouveaux services multimédias.

Or, les télécommandes fournies par défaut avec les postes de télévision ne permettent pas une navigation aisée sur Internet. En général, elles privilégient la compacité et la simplicité d'utilisation. Par d'exemple, il est très difficile de saisir une adresse URL (pour « Uniform Resource Locator » en anglais) dans la barre d'adresses.

De plus, les favoris Internet enregistrés dans le poste de télévision ne fournissent pas à l'utilisateur une expérience multimédia satisfaisante. En effet, la liste des favoris est statique et pour obtenir une mise à jour des informations de ses sites préférés, l'utilisateur doit manuellement ouvrir chacun des sites. Cette mise à jour peut être fastidieuse dans le cas où un grand nombre de sites Internet est enregistré dans les favoris d'un utilisateur.

Cette contrainte d'utilisation constitue un frein à l'adoption des postes de télévision comme moyens multimédia de consultation de contenus en ligne (Internet, vidéo, flux RSS, ou autres).

La présente invention vient améliorer la situation.

A cet effet, la présente invention propose de rapprocher un équipement mobile, adapté pour la gestion de favoris Internet, et un équipement de restitution, notamment de salon, afin de fournir un système de gestion et d'enrichissement des favoris en utilisant l'équipement mobile comme « télécommande » de l'équipement de restitution.

La présente invention vise alors un procédé de traitement de données pour la gestion d'adresses de favoris dans une mémoire d'un équipement de restitution. Le procédé, au sens de l'invention, comprend avantageusement :
- un téléchargement sur l'équipement mobile de données d'adresse d'au moins un favori enregistrées dans une mémoire de l'équipement de restitution, l'équipement mobile et l'équipement de restitution étant connectés,
- un téléchargement sur l'équipement mobile de données d'adresse de flux d'informations textuelles délivrées par une ressource correspondant à au moins une adresse de favori, l'équipement mobile étant connecté à cette ressource, et
- une mise en correspondance dans une mémoire de l'équipement mobile desdites données d'adresses de flux d'informations textuelles, d'une part, et desdites données d'adresses des favoris à partir desquelles les flux d'informations textuelles sont téléchargeables, d'autre part.

On entend par « flux d'informations textuelles », un ensemble de données souvent formatées, provenant par exemple d'une ressource Internet, et dont l'objectif est de fournir des informations (ou un résumé) aux utilisateurs sans que ces derniers aient besoin de naviguer sur cette ressource. Ces flux permettent de rendre accessible une partie choisie d'un site, en dehors de ce site, par exemple dans un agrégateur de contenus. On connaît, par exemple, des flux de ce type dits RSS (« Really Simple Syndication » en anglais) et formatés en langage XML (« eXtensible Markup Language » en anglais).

On entend par « flux d'informations textuelles associés à un favori » les flux d'informations textuelles pouvant être téléchargés depuis les données d'adresses des favoris.

Ainsi, la présente invention permet, de manière distante, de gérer les favoris enregistrés dans un poste de télévision par exemple, sur un équipement dont l'interface est plus ergonomique que celle du poste de télévision. Un mode de réalisation peut ainsi mettre en oeuvre une gestion de favoris depuis un téléphone portable. Les favoris peuvent alors être stockés sur une mémoire du poste de télévision.

A titre d'illustration, et dans le cas des flux de type RSS, les adresses de ces flux sont disponibles dans l'entête (ou « header » en anglais) du code source de pages Internet sous les balises « <link> » ayant un type « application/rss+xml ».

Ainsi, pour obtenir la liste des flux RSS associés à un favori, il est possible de parcourir la page Internet de ce favori et d'identifier l'ensemble des balises « <link> » ayant le type précité.

La mise en correspondance dans l'équipement mobile peut impliquer alors de mettre en relation logique les favoris présents dans l'équipement de restitution et les flux RSS respectifs présents dans les pages Internet de ces favoris.

Le contenu de ces flux est dynamique, c'est-à-dire que celui-ci est mis à jour régulièrement par les éditeurs de contenus de page Internet.

Ainsi, la gestion des favoris peut se réaliser de manière enrichie. En effet, des flux d'informations textuelles associés à ces favoris, c'est-à-dire par exemple présent dans l'entête de la page Internet de ces favoris, peuvent être mis à jour lors de leur téléchargement. Ainsi, leur mise en correspondance avec les favoris respectifs est aussi mise à jour, ce qui fournit avantageusement un certain dynamisme aux favoris.

Avantageusement, le procédé peut comprendre en outre une préparation d'au moins une commande de traitement des données d'adresses de favori mise en oeuvre auprès de l'équipement mobile, et un envoi de ces commandes de traitement préparées depuis l'équipement mobile vers l'équipement de restitution pour exécution de ces commandes auprès de l'équipement de restitution.

Ainsi, l'équipement mobile peut commander le terminal de restitution en bénéficiant d'une interaction réciproque entre ces deux équipements. Ces commandes peuvent être, par exemple, l'ajout, la suppression ou encore le classement d'un favori.

En complément ou en variante, au moins une commande de traitement des données d'adresses des favoris comporte un ordre d'ajout/suppression de données d'au moins une adresse de favori afin de mettre à jour des favoris enregistrés dans l'équipement de restitution.

En complément ou en variante, au moins une commande de traitement des données d'adresses des favoris comporte un ordre de classement de données d'au moins une adresse de favori par rapport à d'autres adresses de favoris communiquées par l'équipement de restitution afin de mettre à jour les favoris enregistrés dans l'équipement de restitution.

Ainsi, la présente invention offre la possibilité d'une gestion avancée de favoris en les organisant, en en ajoutant ou en en supprimant selon les souhaits d'un utilisateur. Par exemple, un utilisateur peut supprimer un favori qu'il ne consulte plus ou ajouter une adresse de favori d'un nouveau site qu'il vient de découvrir.

En complément ou en variante, au moins une commande de traitement des données d'adresses de favoris peut consister en une commande d'affichage du contenu d'une ressource sur un réseau étendu, l'adresse de la ressource étant stockée parmi les données d'au moins un flux d'informations textuelles (par exemple un flux RSS) ou d'au moins un favori.

En effet, par exemple et dans le cas des flux RSS (dont une des versions est présenté à l'adresse http://www.rssboard.org/rss-specification), la balise « <source> » ou « <link> » peut présenter une adresse d'une page Internet.

Ainsi, dans un mode de réalisation de l'invention, la présente invention peut permettre de déclencher à distance l'affichage d'une page Internet sur le navigateur Internet du poste de télévision. L'écran du poste de télévision étant, dans cet exemple, de dimensions importantes relativement à celles de l'équipement mobile, le confort de lecture est ainsi significativement amélioré. L'utilisateur peut déclencher cet affichage depuis l'interface d'un téléphone mobile tactile.

Avantageusement, au moins une des commandes de traitement peut être exécutée sur l'équipement mobile en cohérence avec des commandes de traitement programmées sur l'équipement mobile et à destination de l'équipement de restitution.

Ainsi, toute modification, ajout, suppression ou encore classement, peut être répercuté sur les différents équipements mobiles et/ou de restitution. Les différents favoris sont alors « cohérents » sur tous ces équipements. Dès lors que l'utilisateur effectue une modification sur la liste de ses favoris, les équipements mis en réseau pour la gestion de ces favoris peuvent avoir, en local, une version à jour de cette liste.

En outre, l'équipement mobile, s'il est doté d'un écran, peut afficher sur son écran les données d'adresses des favoris transmises par l'équipement de restitution et mises en correspondance avec les données d'adresses de flux d'informations textuelles correspondantes.

Par exemple, ces données peuvent être présentées sous la forme d'une liste déroulante. Ainsi, l'utilisateur peut naviguer dans ses favoris de manière simple et ergonomique. Cette interface peut, de plus, afficher les moyens de gestion propres à chaque favori, notamment l'ajout, la suppression ou le classement de favoris. De plus, la mise en correspondance des flux d'informations textuelles téléchargés et des favoris permet d'enrichir ces favoris par des sources de données dynamiques.

Des programmes informatiques, notamment de gestion des favoris, comme présentée ci-avant, installés sur l'équipement de restitution et/ou sur l'équipement mobile, sont eux-mêmes avantageux, dès lors qu'ils permettent de mettre en oeuvre le procédé de l'invention. Ils peuvent par exemple être installés sur un équipement préexistant.

Ainsi, l'invention vise également un programme informatique comportant des instructions pour la mise en oeuvre du procédé de gestion précédemment décrit lorsque ce programme est exécuté par un processeur, notamment sur l'équipement mobile ou sur un équipement de restitution.

Ainsi, par exemple, ces programmes permettent d'enrichir les fonctionnalités par défaut d'un terminal de type « Set Top Box » (ou « STB ») et d'un équipement mobile standard. Elles peuvent alors permettre de gérer et de consulter les favoris enregistrés sur un terminal STB depuis un téléphone à écran tactile par exemple, dont l'interface est plus ergonomique que celle d'un poste de télévision.

L'équipement mobile, lui-même, est avantageux dès lors qu'il permet de gérer des données d'adresses de favoris et qu'il peut être utilisé directement avec un équipement de restitution compatible et préexistant. Ainsi, l'invention vise également un équipement mobile, comportant des moyens de liaison à un équipement de restitution. Cet équipement comporte avantageusement, pour la gestion d'adresses de favoris auprès de l'équipement de restitution, des moyens de :
- réception auprès d'un équipement de restitution de données d'adresses de favoris,
- réception auprès d'une ressource distante de données d'adresses de flux d'informations textuelles,
- mises en correspondance avec des données d'adresses de flux d'informations textuelles avec des données d'adresses de favoris correspondantes,
- préparation d'au moins une commande de traitement des données d'adresses des favoris sur l'équipement mobile, et
- envoi d'au moins une commande de traitement préparée depuis l'équipement mobile sur l'équipement de restitution pour exécution de ces commandes auprès de l'équipement de restitution.

L'équipement de restitution, lui-même, est avantageux, dès lors qu'il permet de gérer des données d'adresses de favoris et qu'il peut être utilisé directement avec un équipement mobile compatible et préexistant. Ainsi, l'invention vise également un équipement de restitution, comportant au moins des moyens de liaison à un équipement mobile. Cet équipement comporte avantageusement, pour la gestion d'adresses de favoris auprès l'équipement de restitution des moyens de :
- stockage de données d'adresses des favoris, et
- émission à un équipement mobile de données d'adresses des favoris.

Enfin, le système constitué d'au moins un équipement de restitution et d'au moins un équipement mobile est, lui-même, avantageux, et l'invention vise également un système de traitement de données pour la gestion d'adresses de favoris comportant au moins un équipement de restitution du type ci-avant, et au moins un équipement mobile du type ci-avant.

Avantageusement, un mode de réalisation de l'invention permet de gérer les favoris RSS (« Really Simple Syndication » » en anglais) enregistrés dans le navigateur d'un équipement de restitution tel qu'un poste de télévision à partir d'un terminal tel qu'un téléphone à écran tactile. Les favoris, téléchargés sur le téléphone, peuvent être facilement parcourus par un utilisateur grâce à l'interface utilisable au doigt sur l'écran tactile et des pages Internet correspondantes aux flux RSS peuvent être affichées sur l'écran du poste de télévision afin d'obtenir une large zone de restitution.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une vue schématique des équipements et des réseaux en présence selon un mode de réalisation de l'invention ;
- la figure 2 est un schéma fonctionnel des interactions possibles entre un équipement mobile et un équipement de restitution de salon;
- la figure 3 est un schéma des échanges de données entre un équipement mobile et un équipement de restitution selon un mode de réalisation de l'invention lors de l'ajout d'un nouveau favori aux enregistrements d'un équipement de restitution ;
- la figure 4 est un schéma des échanges de données entre les différents équipements selon un mode de réalisation de l'invention lors de la consultation des favoris par l'équipement mobile;
- les figures 5(a), 5(b), 5(c) présentent trois pages d'écran d'une interface de l'équipement mobile selon un mode de réalisation de l'invention, représentant respectivement un page d'écran de présentation de favoris, une page d'écran de présentation des flux de données textuelles associés à un favori, et une page d'écran de présentation du contenu d'un flux de données textuelles;
- la figure 6 est une vue détaillée d'un équipement mobile selon un mode de réalisation de l'invention ;
- la figure 7 est une vue détaillée d'un équipement de restitution selon un mode de réalisation de l'invention.

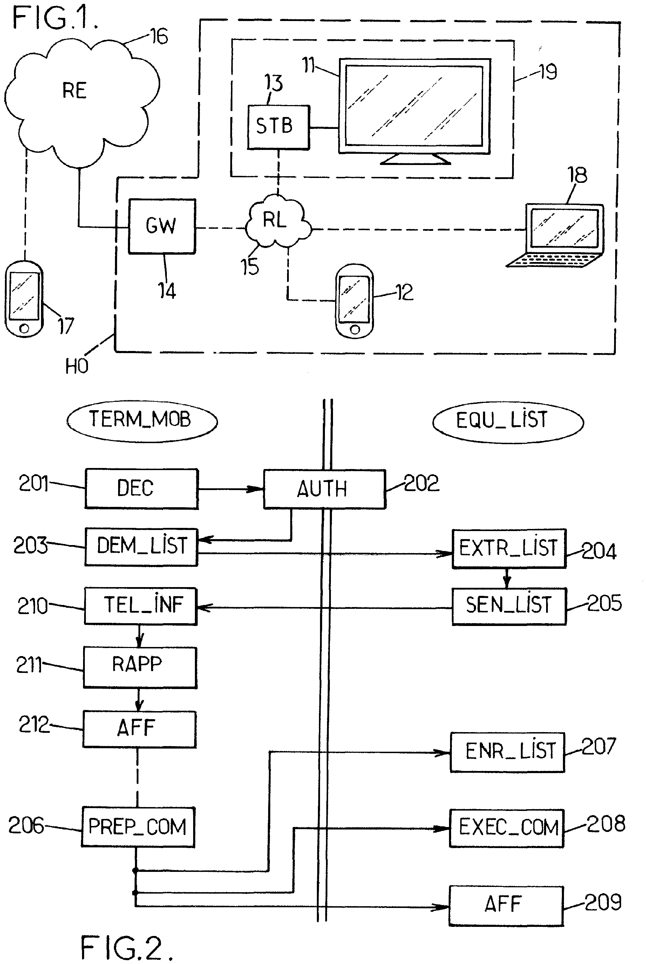

La figure 1 représente un réseau local d'un domicile typique HO. Le réseau local comporte dans l'exemple représenté une passerelle 14 qui est connectée à un réseau étendu 16 de type Internet.

Dans ce réseau local 15, des équipements de télécommunication (par exemple des équipements mobiles 12 ou des ordinateurs 18) ont la possibilité d'échanger des données. L'équipement mobile 17 en particulier peut être relié au réseau étendu 16 (connexion 3G), tout en étant relié au réseau local 15 (via une connexion Wifi) et échanger des données avec un équipement quelconque connecté au réseau local 15. Par exemple, des solutions mettant en oeuvre des réseaux VPN (pour « Virtual Private Network » en anglais) ou des solutions de translation d'adresses NAT (pour « Network Address Translation » en anglais) peuvent être mises en oeuvre.

En outre, au moins un poste de télévision 11 est relié au réseau local 15.

Certains postes de télévision ont aujourd'hui la capacité de se connecter à un réseau filaire ou sans fil. Néanmoins, des équipements de télécommunication intermédiaires, tels que des terminaux 13 de type STB (pour « Set Top Box » en anglais) servent le plus souvent d'interfaces entre les réseaux locaux et les postes de télévision. La figure 1 représente un exemple dans lequel le poste de télévision 11 n'a pas de capacité réseau mais est connecté à un terminal STB 13. Ainsi, il est possible de naviguer sur des sites Internet en utilisant la combinaison du navigateur Internet installé sur le terminal STB 13 et du poste de télévision 11 comme support visuel.

Dans ce qui précède, on a nommé indistinctement notamment un poste de télévision seul et un ensemble constitué d'un poste de télévision et d'un terminal de type STB reliés ensemble, par les mêmes termes « équipement de restitution».

Ainsi, pour plus de concision, un ensemble d'équipements ayant des fonctionnalités cumulées de connexion à un réseau local, de rendu de page Internet (par exemple un navigateur Internet) et d'affichage (par exemple, un poste de télévision) est désigné ci-après par les termes « équipement de restitution» 19.

Dans la configuration présentée sur la figure 1, l'équipement mobile 12 peut interagir avec l'équipement de restitution 19 via le réseau local 15 afin de visualiser et de gérer les favoris de l'équipement de restitution 19.

Cette interaction est présentée plus en détails sur la figure 2. En effet, la figure 2 présente un mode de réalisation de l'invention pour la restitution et la gestion des favoris de l'équipement de restitution 19 au moyen d'un équipement mobile 12.

Par ailleurs, le schéma fonctionnel présenté sur la figure 2 est un exemple typique d'un programme dont certaines instructions peuvent être réalisées auprès de l'équipement de restitution et d'autres, auprès de l'équipement mobile. A ce titre, la figure 2 peut correspondre à l'organigramme de l'algorithme général d'un programme informatique au sens de l'invention.

Dans un exemple de réalisation, l'équipement mobile 12 mène une phase de découverte du réseau (étape 201) afin d'identifier l'ensemble des équipements de restitution 13, 19 compatibles et en service (par exemple sous tension). Ensuite, une phase d'authentification (étape 202) entre l'équipement mobile 12 et l'équipement de restitution 13, 19 est alors réalisée. Cette phase constitue une protection contre l'accès non-autorisé à des données personnelles que constituent les favoris. Ainsi, l'équipement de restitution 19 peut afficher, par exemple, un code PIN (pour « Personal Identification Number » en anglais) sur sa zone d'affichage. L'utilisateur doit alors saisir le code sur l'équipement mobile 12 afin de s'authentifier. D'autres modes de réalisation peuvent être envisagés, comme l'emploi d'identifiants et de mots de passe préalablement configurés dans l'équipement de restitution 19.

Avantageusement, l'équipement mobile 12 effectue une requête (étape 203), éventuellement sur demande d'un utilisateur, auprès de l'équipement de restitution 13, 19 afin de récupérer la liste des favoris Internet enregistrés dans le navigateur Internet de l'équipement de restitution 19. L'équipement de restitution 13, 19 effectue alors une extraction (étape 204) des favoris du navigateur et l'envoie (étape 205) à l'équipement mobile 12. Ces favoris sont stockés, par exemple, de manière temporaire dans une mémoire de l'équipement mobile pour réutilisation future.

Les données envoyées à l'équipement mobile 12 comportent les adresses des favoris (l'adresse URL du site Internet enregistrée dans ses favoris), les icônes représentatives de ces adresses (ou des « favicons » selon une contraction des mots « favorites » et « icon » en anglais), et les titres de ces favoris.

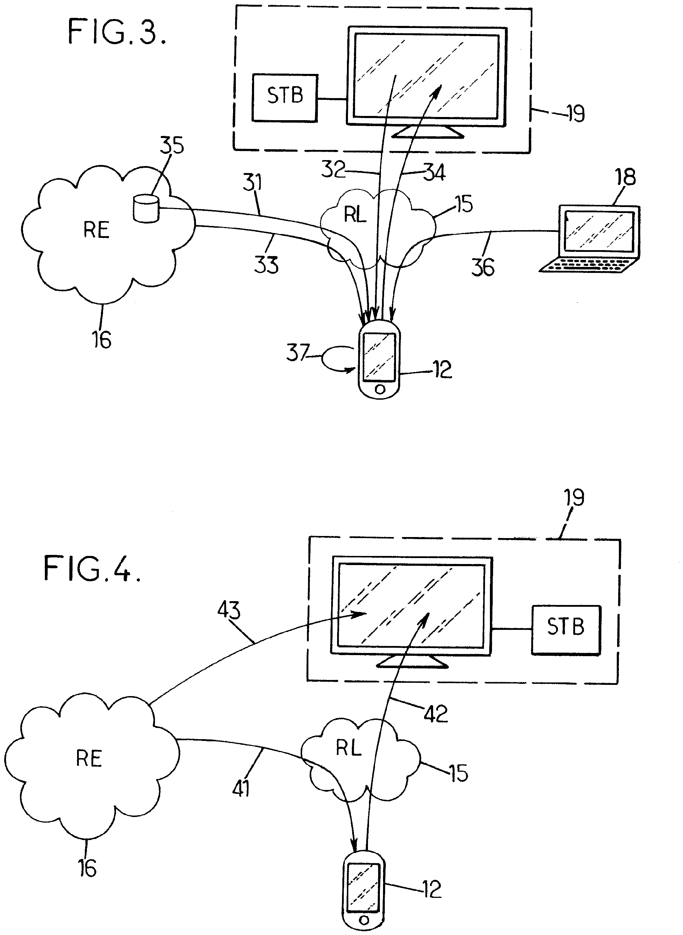

Une fois les données des favoris reçues de l'équipement de restitution 13, 19, l'équipement mobile 12 déclenche le téléchargement des flux d'informations textuelles associés à ces favoris (étape 210). L'étape de téléchargement de ces flux d'informations textuelles est présentée plus en détails en référence à la figure 4.

L'équipement mobile peut ainsi mettre en correspondance (étape 211) les données des favoris et les flux d'informations téléchargés afin de les afficher (étape 212) au moyen de son écran et enrichir ainsi l'expérience de l'utilisateur lors de la consultation de ses favoris.

En fonction des différentes actions d'un utilisateur sur l'équipement mobile, cet équipement mobile prépare alors des commandes de traitement (étape 206) des favoris Internet. L'équipement mobile envoie alors ces commandes de traitement à l'équipement de restitution 13, 19 (étape 207, 208, ou 209). Ces commandes sont notamment :
- la soumission (étape 207) d'une nouvelle liste de favoris Internet à enregistrer dans l'équipement de restitution si l'utilisateur souhaite mettre à jour la liste des favoris sur l'équipement de restitution,
- ou encore la demande d'affichage (étape 209) d'une ressource Internet dont l'adresse est contenue dans les flux d'informations textuelles associés aux favoris si l'utilisateur souhaite consulter, par exemple, une page Internet relative à ces flux d'informations textuelles,
- ou encore la soumission (étape 208) d'une commande à l'équipement de restitution dite « commande unitaire » et consistant, par exemple, en l'ajout/suppression d'un favori Internet, l'organisation des favoris Internet les uns vis-à-vis des autres (classement ou notation). Ces actions permettent en particulier de maintenir une cohérence entre la liste de favoris Internet stockée dans l'équipement de restitution et dans l'équipement mobile, et ainsi mettre à jour, par exemple, les favoris dans l'équipement de restitution.

Pour ajouter un nouveau favori Internet à ses favoris déjà enregistrés dans l'équipement de restitution 13, 19, l'utilisateur a, dans le mode de réalisation présenté par la figure 3, plusieurs choix. L'utilisateur identifie un favori Internet qu'il souhaite enregistrer :
- à partir du navigateur de l'équipement de restitution 13, 19 (flèche 32) en se servant de son équipement mobile 12 comme d'une télécommande ;
- en se connectant sur une base de données externe 35 afin d'obtenir une liste de favoris (flèche 31). Cette base de données regroupe un ensemble de favoris présélectionnés par un opérateur, par exemple, l'ensemble des favoris relatifs à la « gastronomie en France ». Cette base peut être notamment une base MySQL (pour « My Simple Query Language » en anglais) ;
- à partir d'une base de données présente dans l'équipement mobile 12 lui-même (flèche 37). Cette base de donnée peut être par exemple installée sur l'équipement mobile 12 et peut contenir des favoris préexistants ;
- à partir de la bibliothèque de favoris d'un ordinateur 18 et accessible (flèche 36) via une routine spécifique (par exemple un plugin) installée sur l'ordinateur. Ainsi, l'utilisateur pourra synchroniser les favoris qu'il a enregistrés sur son ordinateur personnel avec les favoris enregistrés dans l'équipement de restitution 19.

Préalablement à l'enregistrement d'un nouveau favori sur l'équipement de restitution 19, l'équipement mobile 12 peut télécharger en complément des informations (flèche 33) relatives à ce favori, notamment l'icône associée à la page Internet du favori, ou le titre de ce favori.

Le favori alors identifié par l'utilisateur au moyen de l'équipement mobile 12, ainsi que, le cas échéant, les informations complémentaires téléchargées, sont sauvegardées dans une mémoire de l'équipement de restitution (flèche 34) au travers du réseau local 15.

La figure 4 présente les échanges de données entre les différents équipements selon un mode de réalisation de l'invention lors de la consultation des favoris par l'équipement mobile.

Lorsque l'utilisateur consulte les favoris enregistrés dans son équipement de restitution, les flux d'informations associés à ces favoris sont téléchargés depuis le réseau étendu 16 (flèche 41) et traités selon le mode de réalisation précédemment présenté.

Pour chaque élément d'un flux de type RSS (« Really Simple Syndication » en anglais), sont notamment disponibles :
- un titre,
- une description, et
- une adresse URL permettant d'accéder à une information plus complète.

Si l'utilisateur souhaite visualiser l'information complète d'un élément d'un flux, l'adresse correspondant à cet élément est alors transmise (flèche 42) au navigateur Internet de l'équipement de restitution 13, 19. Ce navigateur télécharge alors (flèche 43) les données contenues à l'adresse URL indiquée afin de les afficher sur l'écran de l'équipement de restitution.

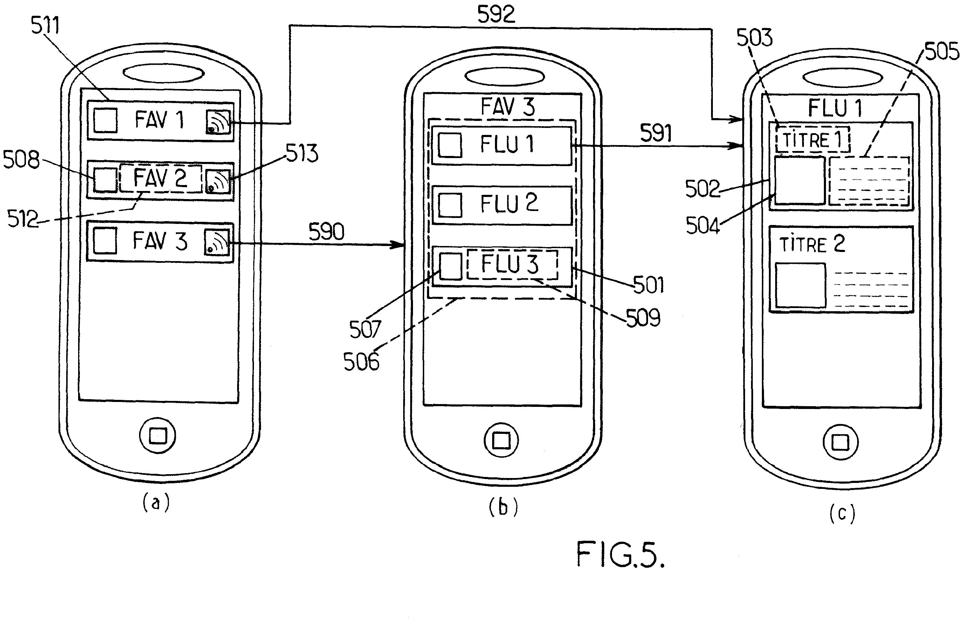

On décrit ci-après, en référence à la figure 5, un exemple d'interface qu'offre l'application de gestion des favoris Internet sur l'équipement mobile, pour illustrer un fonctionnement possible de l'équipement mobile. Pour plus de clarté, les flux d'informations textuelles considérés dans le mode de réalisation présenté sur la figure 5 sont des flux RSS.

Les favoris Internet enregistrés sur l'équipement de restitution 19 sont présentés sur l'écran de l'équipement mobile 12 (figure 5(a)) sous forme d'une liste 511 comprenant notamment l'icône du favori Internet 508 (favicon) ainsi que son titre 512.

Sur sélection d'un favori Internet sur cette interface, la page Internet associée à ce favori est affichée sur l'écran de l'équipement de restitution permettant ainsi une lecture plus aisée.

En outre, la sélection de la zone 513 par l'utilisateur permet d'afficher la liste des flux RSS relatifs à ce favori (flèche 590), cette liste étant téléchargée comme décrit précédemment.

Les différents flux RSS sont alors présentés (figure 5(b)) sous une forme similaire. Cet affichage comprend une liste 506 de zones 501. Chaque zone comprend, dans l'exemple représenté, une icône 507 ainsi que le titre 509 identifiant de manière concise le flux RSS.

Si l'utilisateur souhaite consulter les éléments d'un flux RSS, il sélectionne la zone correspondant à ce flux sur l'écran de la figure 5(b) et déclenche alors l'affichage (flèche 591) d'une nouvelle page d'écran.

Cette nouvelle page (figure 5(c)) propose une présentation des différents éléments d'un flux sous forme d'une liste de zones 502 comprenant, par exemple, un titre 503, une image 504, un court résumé textuel 505 et un lien vers une page Internet.

La sélection de l'une des zones 502 déclenche alors l'affichage sur l'équipement de restitution 19 de cette page Internet.

Il est à noter que la sélection d'un favori associé à un unique flux RSS sur l'écran de la figure 5(a) déclenche, avantageusement, l'affichage (flèche 592), non pas d'une liste comportant cet unique flux de données textuelles, mais d'une liste d'éléments contenus dans ce flux (figure 5(c)), comme par exemple des articles d'actualités.

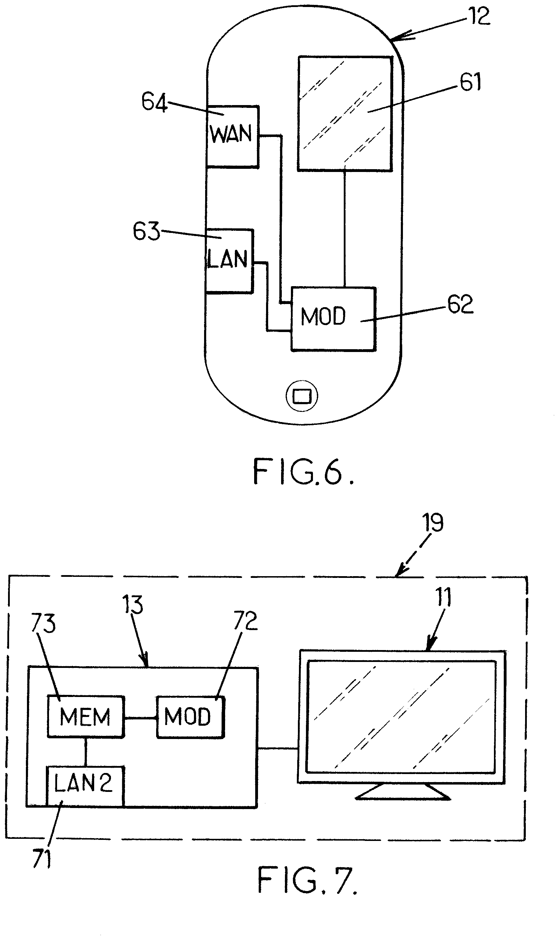

La figure 6 est une vue détaillée d'un équipement mobile selon une forme de réalisation particulière de l'invention. L'équipement mobile 12 comprend typiquement un écran 61, un module de traitement 62, une interface 63 de connexion à un réseau local (via une liaison wifi par exemple) et une interface 64 de connexion à un réseau étendu.

Lorsque l'utilisateur de l'équipement mobile souhaite consulter les favoris enregistrés sur un équipement de restitution 19, l'équipement mobile 12 télécharge ces favoris sur l'équipement de restitution 19 au moyen de l'interface au réseau local 63.

Ces données sont ensuite traitées par le module 62 (comportant typiquement un processeur et une mémoire de travail). Le module 62 sollicite alors le téléchargement des données de flux d'informations associés à ces favoris au moyen de l'interface 64 vers le réseau étendu. Ce module 62 peut, par exemple, stocker en mémoire et mettre en oeuvre une table de correspondance (entre les favoris et les flux téléchargés, associés respectivement à ces favoris).

Ces deux téléchargements terminés, une mise en correspondance des données d'adresses de favoris et de flux d'informations peut ainsi être réalisée afin de présenter le résultat à l'utilisateur au moyen de l'écran 61 de l'équipement mobile.

La figure 7 est une vue détaillée d'un équipement de restitution selon une forme de réalisation particulière de l'invention.

L'équipement de restitution comporte ici un poste de télévision 11 et un terminal de type STB 13. Le terminal STB comporte ici au moins:
- une interface 71 vers le réseau local,
- un module de traitement 72 (comprenant typiquement un processeur et une mémoire de travail), et
- une mémoire de stockage 73 des données de favoris.

Lorsque l'équipement mobile envoie une commande d'extraction de la liste des favoris enregistrés dans la mémoire 73 de l'équipement de restitution, cette commande est reçue par le terminal de type STB 13 sur son interface réseau 71.

Consécutivement, une extraction de cette liste de favoris enregistrés dans la mémoire du terminal 72 est effectuée et la liste est transmise en retour à l'équipement mobile 12 au travers de l'interface réseau 71.

Bien entendu, la présente invention ne se limite pas aux formes de réalisation décrites ci-avant à titre d'exemples ; elle s'étend à d'autres variantes.

En effet, d'autres formes de réalisation sont possibles.

Par exemple, on a décrit ci-avant un équipement de restitution correspondant à un poste de télévision qui peut être relié à un terminal STB. Néanmoins, cette réalisation présente des variantes possibles. Par exemple, l'équipement mobile peut aider à la gestion des favoris sur un écran de réfrigérateur pour organiser les favoris pour des commandes alimentaires (ou d'informations de promotions, ou autres) via le réseau étendu.

De plus, on a décrit ci-avant une connexion entre l'équipement de restitution et l'équipement mobile au moyen d'une connexion réseau. Néanmoins, cette connexion peut également être réalisée par d'autres moyens comme par exemple une connexion directe, telle qu'un branchement de l'équipement mobile à l'équipement de restitution au moyen d'un câble USB ou toute autre connectique.

## Revendications

1. Procédé de traitement de données pour la gestion d'adresses de favoris dans un équipement de restitution (19), le procédé étant **caractérisé en ce qu'**il comprend :
- un téléchargement sur un équipement mobile (12) de données d'adresses de favori enregistrées dans l'équipement de restitution (19), l'équipement mobile 12) et l'équipement de restitution étant connectés,
- un téléchargement sur l'équipement mobile (12) de données d'adresses de flux d'informations textuelles, depuis une ressource correspondant une adresse de favori, l'équipement mobile étant connecté à cette ressource (15, 16),
- une mise en correspondance sur l'équipement mobile (12) desdites données d'adresses de flux d'informations textuelles, d'une part, et desdites données d'adresses des favoris à partir desquelles sont téléchargés les flux d'informations textuelles, d'autre part.
- une préparation d'au moins une commande de traitement (206) des données d'adresses des favoris sur l'équipement mobile, et
- un envoi d'au moins une commande (207, 208, 209) de traitement préparée depuis l'équipement mobile sur l'équipement de restitution (19) pour exécution de ces commandes auprès de l'équipement de restitution (19).

2. Procédé selon la revendication 1, dans lequel au moins une commande de traitement des données d'adresses des favoris comporte un ordre d'ajout/suppression (208) d'au moins une donnée d'adresse de favori afin de mettre à jour les enregistrements des favoris contenus dans l'équipement de restitution (19).

3. Procédé selon l'une des revendications précédentes, dans lequel au moins une commande de traitement des données d'adresses des favoris comporte un ordre de classement (208) d'au moins une donnée d'adresses de favori par rapport à d'autres adresses de favoris communiquées par l'équipement de restitution afin de mettre à jour les enregistrements des favoris contenus dans l'équipement de restitution (19).

4. Procédé selon l'une des revendications précédentes, dans lequel au moins une commande de traitement des données d'adresses des favoris comporte une commande d'affichage (209) du contenu d'une ressource sur un réseau étendu dont l'adresse est présente dans les données d'au moins un flux d'informations textuelles ou d'au moins un favori.

5. Procédé selon l'une des revendications précédentes, dans lequel au moins une des commandes (208) de traitement est exécutée sur l'équipement mobile (12) en cohérence avec les commandes de traitement préparées depuis l'équipement mobile (12) à destination de l'équipement de restitution (19).

6. Procédé selon l'une des revendications précédentes, dans lequel l'équipement mobile (12) est doté d'un écran (61) et affiche sur son écran (61) les données d'adresses des favoris transmis par l'équipement de restitution (19) mises en correspondance avec les données d'adresses de flux d'informations textuelles correspondantes.

7. Programme informatique comportant des instructions (201, 202, 203, 204, 205, 206, 207, 208, 209, 210) pour la mise en oeuvre du procédé selon l'une des revendications précédentes, lorsque ce programme est exécuté par un processeur.

8. Equipement mobile (12), comportant des moyens de liaison avec au moins un équipement de restitution (19), **caractérisé en ce qu'**il comporte, pour la gestion d'adresses de favoris auprès dudit équipement de restitution (19) :
- des moyens de téléchargement (63) depuis un équipement de restitution de données d'adresses de favori enregistrées dans l'équipement de restitution, l'équipement mobile et l'équipement de restitution étant connectés,
- des moyens de téléchargement (64) de données d'adresses de flux d'informations textuelles, lesdites données d'adresses de flux étant délivrées par une ressource correspondant à moins une adresse de favori, l'équipement mobile étant connecté à cette ressource,
- des moyens de mise en correspondance (62) desdites données d'adresses de flux d'informations textuelles, d'une part, et desdites données d'adresses des favoris à partir desquelles sont téléchargés les flux d'informations textuelles, d'autre part,
- des moyens de préparation d'au moins une commande de traitement (206) des données d'adresses des favoris sur l'équipement mobile, et
- des moyens d'envoi d'au moins une commande (207, 208, 209) de traitement préparée depuis l'équipement mobile sur l'équipement de restitution (19) pour exécution de ces commandes auprès de l'équipement de restitution (19).

9. Equipement de restitution (19), comportant des moyens de liaison avec un équipement mobile, **caractérisé en ce qu'**il comporte, pour la gestion d'adresses de favoris auprès dudit équipement de restitution :
- des moyens de stockage (73) de données d'adresses des favoris, et
- des moyens d'émission (71) à un équipement mobile de données d'adresses des favoris.

10. Système de traitement de données pour la gestion d'adresses de favoris comportant
- au moins un équipement de restitution (19), et
- au moins un équipement mobile (12),
**caractérisé en ce que** l'équipement de restitution comporte au moins des moyens de stockage (73) de données d'adresses des favoris, et des moyens d'émission (71) à un équipement mobile (12) de données d'adresses des favoris,
et **en ce que** l'équipement mobile (12) comporte au moins des moyens de réception (63) auprès d'un équipement de restitution de données d'adresses de favoris, des moyens de réception (64) auprès d'une ressource distante de données d'adresses de flux d'informations textuelles, et des moyens de mise en correspondance (62) sur l'équipement mobile (12) des données d'adresses de flux d'informations textuelles, d'une part, et des données d'adresses des favoris, d'autre part.
